# EUROPEAN PATENT APPLICATION

(11) **EP 4 187 277 A1**
(43) Date of publication of application: **31.05.2023**
(21) Application number: 22210644.5
(22) Date of filing: 30.11.2022
(51) Int. Cl.: G01S 7/40, G01S 13/86, G01S 13/931, G01S 7/41, G01S 7/00, G01S 13/42

(54) **A METHOD TO DETECT RADAR INSTALLATION ERROR FOR PITCH ANGLE ON AUTONOMOUS VEHICLES**

(30) Priority: 30.11.2021 US 202117538528
(71) Applicant: Argo AI, LLC, Pittsburgh, PA 15222 (US)
(72) Inventor: Chang, Yu-Wei, Palo Alto (US); Miao, Hsin, Sunnyvale (US); Vu, Duc, Palo Alto (US); Berry, Jonathan, Palo Alto (US); Reddy, Dikpal, Palo Alto (US)
(74) Representative: Hofstetter, Schurack & Partner

(57) **Abstract**

A method may include receiving at least one camera frame of a first radar target and a second radar target, determining an estimated radar pose based at least in part on the at least one received camera frame, receiving a first radar cross-section (RCS) response from the first radar target and second radar target, determining an estimated elevation angle based at least in part on the first RCS response, and determining an estimated radar angle by refining the estimated radar pose and the estimated elevation angle based on at least in part on the first RCS response.

## Description

### BACKGROUND

Vehicles are often equipped with a sensor system to collect data relating to the current and developing state of the vehicle's surroundings. The proper performance of a vehicle depends on the accuracy of the sensor system. The sensor system may comprise visual spectrum cameras, laser-ranging devices (LIDARs), thermal sensors, or other types of sensors. The sensor system enables a vehicle to detect objects and obstacles in the vicinity of the vehicle and tracks the velocity and direction of pedestrians, other vehicles, traffic lights, or similar objects in the environment around the vehicle. However, these sensors should be aligned for the data to be reliable.

### SUMMARY

A method may include providing (e.g. receiving or fetching or obtaining) at least one camera frame of a first radar target, determining an estimated radar pose based at least in part on the at least one provided camera frame, providing (e.g. receiving or fetching or obtaining) a first radar cross-section (RCS) response from the first radar target, determining an estimated elevation angle based at least in part on the first RCS response, providing (e.g. receiving or fetching or obtaining) at least one camera frame of a second radar target and/or a second radar cross-section (RCS) response from the second radar target and determining an estimated radar angle by refining the estimated radar pose and the estimated elevation angle based on at least in part on the second RCS response. Providing any of the components such as the at least one camera frame and/or the respective radar cross-section response may comprise receiving the respective components from a data source and/or another computing device and/or obtaining or fetching the respective components from there. It shall be appreciated that the at least one camera frame and/or the respective radar cross-section response may be provided in any suitable manner, for example, it may be sent to the computing device that is performing the method and/or it may be requested or obtained by the computing device. Any of the operations may either be performed directly by the computing device, or at least some of them may be allocated to at least one other computing devices, e.g., by the computing device.

Implementing aspects comprise a system, comprising means for performing a method according to any of the methods described herein. A system, may optionally include a memory; and it may at least one processor optionally coupled to the memory and may be configured (e.g. via programming instructions e.g. stored in the memory) to provide (e.g. receive or fetch or obtain) a camera frame of at least one first radar target, determine an estimated radar pose based at least in part on the provided camera frame of the at least one first radar target, provide (e.g. receive or fetch or obtain) a first radar cross-section (RCS) response from the at least one first radar target, and determine an estimated elevation angle based at least in part on the first RCS response, provide (e.g. receive or fetch or obtain) a second RCS response from at least one second radar target, and determine an estimated radar angle by refining the estimated radar pose and the estimated radar elevation based on at least in part on the second RCS response.

Implementing aspects comprise a computer program, and a computer-readable medium storing the computer program, comprising instructions that, when executed by at least one computing device, cause any of the at least one computing device to perform the steps of any one of the methods described herein. Such a method may comprise operations that may include providing (e.g. receive or fetch or obtain) a camera frame of a first radar target, determining an estimated radar pose based at least in part on the provided camera frame of the first radar target, providing (e.g. receive or fetch or obtain) a first radar cross-section (RCS) response from the first radar target, determining an estimated elevation angle based at least in part on the first RCS response, providing (e.g. receive or fetch or obtain) a second RCS response from a second radar target, and determining an estimated radar angle by refining the estimated radar pose and the estimated radar elevation based on at least in part on the second RCS response. The present disclosure is also concerned with the estimated radar angle, and a data storage medium storing the estimated radar angle, as generated in any of the methods described herein. Likewise, the present disclosure is also concerned with the use of the estimated radar angle, as generated in any of the methods described herein, for controlling a system or a vehicle such as an autonomous vehicle.

### BRIEF DESCRIPTION OF THE DRAWINGS

The accompanying drawings are incorporated herein and form a part of the specification.
FIG. 1 illustrates an example autonomous vehicle system, in accordance with aspects of the disclosure.
FIG. 2 illustrates an example architecture for a vehicle, in accordance with aspects of the disclosure.
FIG. 3 is an example computer system useful for implementing various embodiments.
FIG. 4A illustrates and example radar having a first detection range and field of view.
FIG. 4B illustrates an example radar having a second detection range and field of view.
FIG. 5 illustrates an example elevation angle system.
FIG. 6 illustrates an example layout for the radar pose estimator of the example elevation angle system of FIG. 5.
FIG. 7 illustrates an example radar cross section (RCS) value table for azimuth angles vs. elevation angle of the elevation angle estimator.
FIG. 8A illustrates a two-radar-target layout of the elevation angle system having a first radar target and a second radar target on either side of the radar and a pitch of near zero.
FIG. 8B illustrates a two-radar-target layout of the elevation angle system having a first radar target and a second radar target on either side of the radar and a pitch greater than zero.
FIG. 8C illustrates a two-radar-target layout of the elevation angle system having a first radar target and a second radar target on one side of the radar and a pitch of near zero.
FIG. 8D illustrates a two-radar-target layout of the elevation angle system having a first radar target and a second radar target on one side of the radar and a pitch greater than zero.
FIG. 9 illustrates an example process for the elevation angle system.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for detecting an installation error of a radar sensor on a vehicle, by estimating the elevation angle of the sensor. The disclosed elevation angle system may include a radar pose estimator, an elevation angle estimator, and a module to refine the elevation angle estimate. The radar pose estimator may use a camera to detect a first radar target and infer a location of the first radar target and an estimated radar pose based on a prior calibration of the camera. The elevation angle estimator may collect radar cross-section (RCS) responses from the first radar target and compile the responses in a table. The elevation angle estimator may use a prior azimuth calibration and the compiled look-up table to estimate the elevation angle. The radar pose and elevation angle may also be estimated based on data from the second radar target. The module may use the radar pose estimations to refine the elevation angle estimate.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" (or "AV") is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle.

Notably, the present solution is being described herein in the context of an autonomous vehicle. However, the present solution is not limited to autonomous vehicle applications. The present solution may be used in other applications such as robotic applications, radar system applications, metric applications, and/or system performance applications.

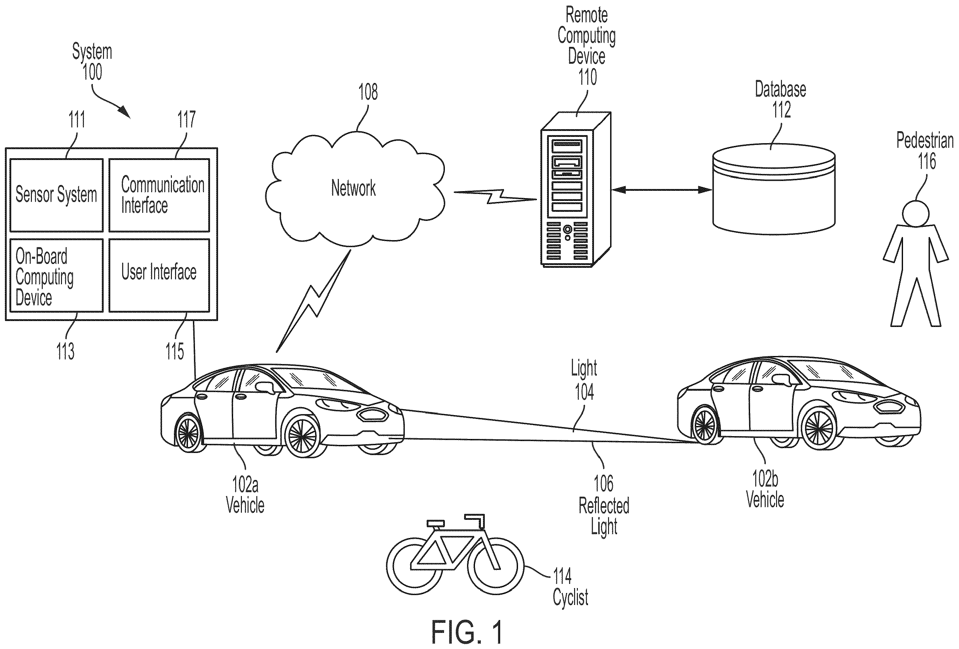

FIG. 1 illustrates an example autonomous vehicle system 100, in accordance with aspects of the disclosure. The system 100 comprises a vehicle 102a that is traveling along a road in a semi-autonomous or autonomous manner. Vehicle 102a is also referred to herein as AV 102a. AV 102a can include, but is not limited to, a land vehicle (as shown in FIG. 1), an aircraft, or a watercraft.

The AV 102a is generally configured to detect objects 102b, 114, 116 in proximity thereto. The objects can include, but are not limited to, a vehicle 102b, cyclist 114 (such as a rider of a bicycle, electric scooter, motorcycle, or the like) and/or a pedestrian 116.

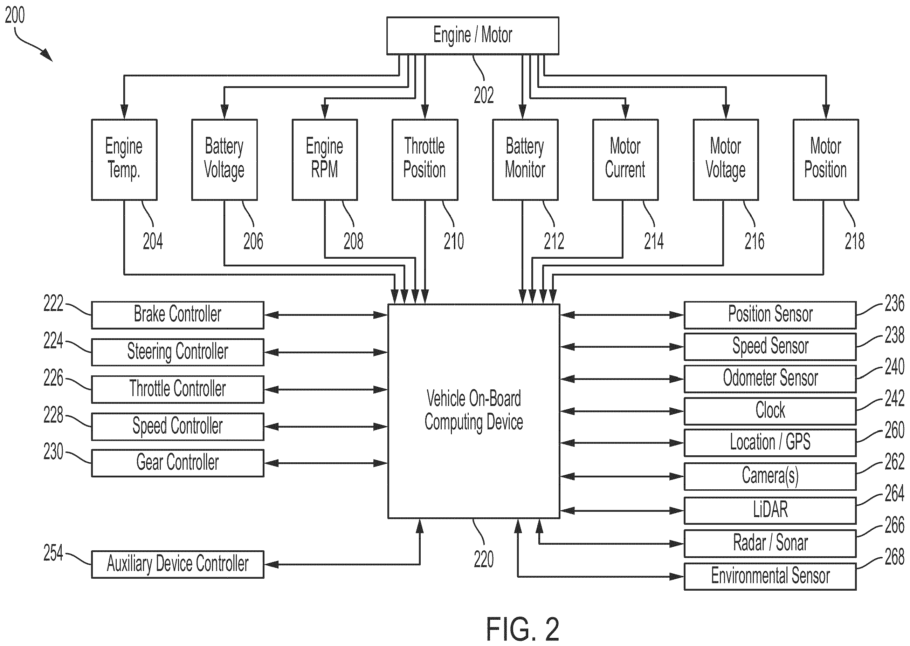

As illustrated in FIG. 1, the AV 102a may include a sensor system 111, an e.g. on-board computing device 113, a communications interface 117, and a user interface 115. Autonomous vehicle 101 may further include certain components (as illustrated, for example, in FIG. 2) included in vehicles, which may be controlled by the on-board computing device 113 using a variety of communication signals and/or commands, such as, for example, acceleration signals or commands, deceleration signals or commands, steering signals or commands, braking signals or commands, etc.

The sensor system 111 may include one or more sensors that are coupled to and/or are included within the AV 102a, as illustrated in FIG. 2. For example, such sensors may include, without limitation, a LiDAR system, a radio detection and ranging (RADAR) system, a laser detection and ranging (LADAR) system, a sound navigation and ranging (SONAR) system, one or more cameras (e.g., visible spectrum cameras, infrared cameras, etc.), temperature sensors, position sensors (e.g., global positioning system (GPS), etc.), location sensors, fuel sensors, motion sensors (e.g., inertial measurement units (IMU), etc.), humidity sensors, occupancy sensors, or the like. The sensor data can include information that describes the location of objects within the surrounding environment of the AV 102a, information about the environment itself, information about the motion of the AV 102a, information about a route of the vehicle, or the like. As AV 102a travels over a surface, at least some of the sensors may collect data pertaining to the surface.

As will be described in greater detail, the AV 102a may be configured with a lidar system, e.g., lidar system 264 of FIG. 2. The lidar system may be configured to transmit a light pulse 104 to detect objects located within a distance or range of distances of the AV 102a. Light pulse 104 may be incident on one or more objects (e.g., AV 102b) and be reflected back to the lidar system. Reflected light pulse 106 incident on the lidar system may be processed to determine a distance of that object to AV 102a. The reflected light pulse 106 may be detected using, in some embodiments, a photodetector or array of photodetectors positioned and configured to receive the light reflected back into the lidar system. Lidar information, such as detected object data, is communicated from the lidar system to an on-board computing device, e.g., on-board computing device 220 of FIG. 2. The AV 102a may also communicate lidar data to a remote computing device 110 (e.g., cloud processing system) over communications network 108. Remote computing device 110 may be configured with one or more servers to process one or more processes of the technology described herein. Remote computing device 110 may also be configured to communicate data/instructions to/from AV 102a over network 108, to/from server(s) and/or database(s) 112.

It should be noted that the LiDAR systems for collecting data pertaining to the surface may be included in systems other than the AV 102a such as, without limitation, other vehicles (autonomous or driven), robots, satellites, etc.

Network 108 may include one or more wired or wireless networks. For example, the network 108 may include a cellular network (e.g., a long-term evolution (LTE) network, a code division multiple access (CDMA) network, a 3G network, a 4G network, a 5G network, another type of next generation network, etc.). The network 108 may also include a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, and/or the like, and/or a combination of these or other types of networks.

The AV 102a may retrieve, receive, display, and edit information generated from a local application or delivered via network 108 from database 112. Database 112 may be configured to store and supply raw data, indexed data, structured data, map data, program instructions or other configurations as is known.

The communications interface 117 may be configured to allow communication between AV 102a and external systems, such as, for example, external devices, sensors, other vehicles, servers, data stores, databases etc. The communications interface 117 may utilize any now or hereafter known protocols, protection schemes, encodings, formats, packaging, etc. such as, without limitation, Wi-Fi, an infrared link, Bluetooth, etc. The user interface system 115 may be part of peripheral devices implemented within the AV 102a including, for example, a keyboard, a touch screen display device, a microphone, and a speaker, etc.

FIG. 2 illustrates an example system architecture 200 for a vehicle, in accordance with aspects of the disclosure. The vehicles 102a and/or 102b of FIG. 1 may have the same or similar system architecture as that shown in FIG. 2. Thus, the following discussion of system architecture 200 is sufficient for understanding vehicle(s) 102a, 102b of FIG. 1. However, other types of vehicles are considered within the scope of the technology described herein and may contain more or less elements as described in association with FIG. 2. As a non-limiting example, an airborne vehicle may exclude brake or gear controllers, but may include an altitude sensor. In another non-limiting example, a water-based vehicle may include a depth sensor. One skilled in the art will appreciate that other propulsion systems, sensors and controllers may be included based on a type of vehicle, as is known.

As shown in FIG. 2, system architecture 200 includes an engine or motor 202 and various sensors 204-218 for measuring various parameters of the vehicle. In gas-powered or hybrid vehicles having a fuel-powered engine, the sensors may include, for example, an engine temperature sensor 204, a battery voltage sensor 206, an engine Rotations Per Minute ("RPM") sensor 208, and a throttle position sensor 210. If the vehicle is an electric or hybrid vehicle, then the vehicle may have an electric motor, and accordingly includes sensors such as a battery monitoring system 212 (to measure current, voltage and/or temperature of the battery), motor current 214 and voltage 216 sensors, and motor position sensors 218 such as resolvers and encoders.

Operational parameter sensors that are common to both types of vehicles include, for example: a position sensor 236 such as an accelerometer, gyroscope and/or inertial measurement unit; a speed sensor 238; and an odometer sensor 240. The vehicle also may have a clock 242 that the system uses to determine vehicle time during operation. The clock 242 may be encoded into the vehicle on-board computing device, it may be a separate device, or multiple clocks may be available.

The vehicle also includes various sensors that operate to gather information about the environment in which the vehicle is traveling. These sensors may include, for example: a location sensor 260 (e.g., a Global Positioning System ("GPS") device); object detection sensors such as one or more cameras 262; a lidar system 264; and/or a radar and/or a sonar system 266. The sensors also may include environmental sensors 268 such as a precipitation sensor and/or ambient temperature sensor. The object detection sensors may enable the vehicle to detect objects that are within a given distance range of the vehicle 200 in any direction, while the environmental sensors collect data about environmental conditions within the vehicle's area of travel.

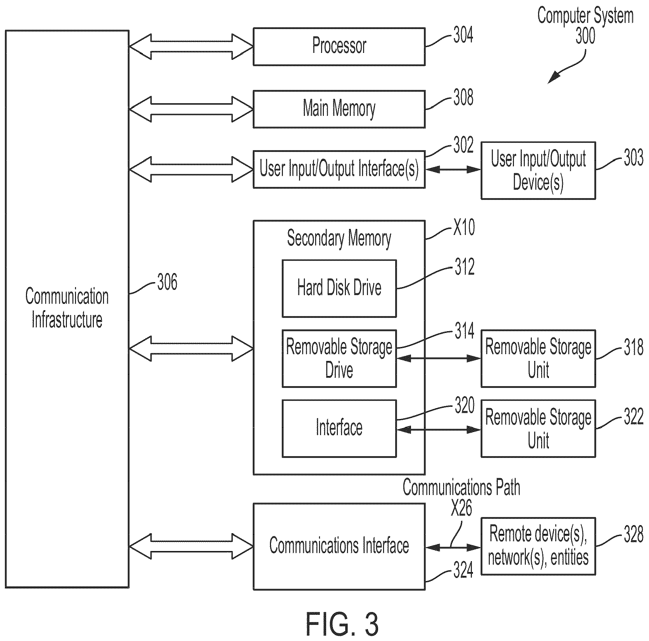

During operations, information is communicated from the sensors to a vehicle on-board computing device 220. The on-board computing device 220 may implemented using the computer system 300 of FIG. 3. The vehicle on-board computing device 220 analyzes the data captured by the sensors and optionally controls operations of the vehicle based on results of the analysis. For example, the vehicle on-board computing device 220 may control: braking via a brake controller 222; direction via a steering controller 224; speed and acceleration via a throttle controller 226 (in a gas-powered vehicle) or a motor speed controller 228 (such as a current level controller in an electric vehicle); a differential gear controller 230 (in vehicles with transmissions); and/or other controllers. Auxiliary device controller 254 may be configured to control one or more auxiliary devices, such as testing systems, auxiliary sensors, mobile devices transported by the vehicle, etc.

Geographic location information may be communicated from the location sensor 260 to the on-board computing device 220, which may then access a map of the environment that corresponds to the location information to determine known fixed features of the environment such as streets, buildings, stop signs and/or stop/go signals. Captured images from the cameras 262 and/or object detection information captured from sensors such as lidar system 264 is communicated from those sensors) to the on-board computing device 220. The object detection information and/or captured images are processed by the on-board computing device 220 to detect objects in proximity to the vehicle 200. Any known or to be known technique for making an object detection based on sensor data and/or captured images can be used in the embodiments disclosed in this document.

Lidar information is communicated from lidar system 264 to the on-board computing device 220. Additionally, captured images are communicated from the camera(s) 262 to the vehicle on-board computing device 220. The lidar information and/or captured images are processed by the vehicle on-board computing device 220 to detect objects in proximity to the vehicle 200. The manner in which the object detections are made by the vehicle on-board computing device 220 includes such capabilities detailed in this disclosure.

The on-board computing device 220 may include and/or may be in communication with a routing controller 231 that generates a navigation route from a start position to a destination position for an autonomous vehicle. The routing controller 231 may access a map data store to identify possible routes and road segments that a vehicle can travel on to get from the start position to the destination position.

In various embodiments, the on-board computing device 220 may determine perception information of the surrounding environment of the AV 102a. Based on the sensor data provided by one or more sensors and location information that is obtained, the on-board computing device 220 may determine perception information of the surrounding environment of the AV 102a. The perception information may represent what an ordinary driver would perceive in the surrounding environment of a vehicle. The perception data may include information relating to one or more objects in the environment of the AV 102a. For example, the on-board computing device 220 may process sensor data (e.g., LiDAR or RADAR data, camera images, etc.) in order to identify objects and/or features in the environment of AV 102a. The objects may include traffic signals, road way boundaries, other vehicles, pedestrians, and/or obstacles, etc. The on-board computing device 220 may use any now or hereafter known object recognition algorithms, video tracking algorithms, and computer vision algorithms (e.g., track objects frame-to-frame iteratively over a number of time periods) to determine the perception.

In some embodiments, the on-board computing device 220 may also determine, for one or more identified objects in the environment, the current state of the object. The state information may include, without limitation, for each object: current location; current speed and/or acceleration, current heading; current pose; current shape, size, or footprint; type (e.g., vehicle vs. pedestrian vs. bicycle vs. static object or obstacle); and/or other state information.

The on-board computing device 220 may perform one or more prediction and/or forecasting operations. For example, the on-board computing device 220 may predict future locations, trajectories, and/or actions of one or more objects. For example, the on-board computing device 220 may predict the future locations, trajectories, and/or actions of the objects based at least in part on perception information (e.g., the state data for each object comprising an estimated shape and pose determined as discussed below), location information, sensor data, and/or any other data that describes the past and/or current state of the objects, the AV 102a, the surrounding environment, and/or their relationship(s). For example, if an object is a vehicle and the current driving environment includes an intersection, the on-board computing device 220 may predict whether the object will likely move straight forward or make a turn. If the perception data indicates that the intersection has no traffic light, the on-board computing device 220 may also predict whether the vehicle may have to fully stop prior to enter the intersection.

In various embodiments, the on-board computing device 220 may determine a motion plan for the autonomous vehicle. For example, the on-board computing device 220 may determine a motion plan for the autonomous vehicle based on the perception data and/or the prediction data. Specifically, given predictions about the future locations of proximate objects and other perception data, the on-board computing device 220 can determine a motion plan for the AV 102a that best navigates the autonomous vehicle relative to the objects at their future locations.

In some embodiments, the on-board computing device 220 may receive predictions and make a decision regarding how to handle objects and/or actors in the environment of the AV 102a. For example, for a particular actor (e.g., a vehicle with a given speed, direction, turning angle, etc.), the on-board computing device 220 decides whether to overtake, yield, stop, and/or pass based on, for example, traffic conditions, map data, state of the autonomous vehicle, etc. Furthermore, the on-board computing device 220 also plans a path for the AV 102a to travel on a given route, as well as driving parameters (e.g., distance, speed, and/or turning angle). That is, for a given object, the on-board computing device 220 decides what to do with the object and determines how to do it. For example, for a given object, the on-board computing device 220 may decide to pass the object and may determine whether to pass on the left side or right side of the object (including motion parameters such as speed). The on-board computing device 220 may also assess the risk of a collision between a detected object and the AV 102a. If the risk exceeds an acceptable threshold, it may determine whether the collision can be avoided if the autonomous vehicle follows a defined vehicle trajectory and/or implements one or more dynamically generated emergency maneuvers is performed in a pre-defined time period (e.g., N milliseconds, wherein N is a number, e.g. in the range from 10 to 5.000). If the collision can be avoided, then the on-board computing device 220 may execute one or more control instructions to perform a cautious maneuver (e.g., mildly slow down, accelerate, change lane, or swerve). In contrast, if the collision cannot be avoided, then the on-board computing device 220 may execute one or more control instructions for execution of an emergency maneuver (e.g., brake and/or change direction of travel).

As discussed above, planning and control data regarding the movement of the autonomous vehicle is generated for execution. The on-board computing device 220 may, for example, control braking via a brake controller; direction via a steering controller; speed and acceleration via a throttle controller (in a gas-powered vehicle) or a motor speed controller (such as a current level controller in an electric vehicle); a differential gear controller (in vehicles with transmissions); and/or other controllers.

Various embodiments can be implemented, for example, using one or more computer systems, such as computer system 300 shown in FIG. 3. Computer system 300 can be any computer capable of performing the functions described herein.

Computer system 300 can be any well-known computer capable of performing the functions described herein.

Computer system 300 includes one or more processors (also called central processing units, or CPUs), such as a processor 304. Processor 304 is connected to a communication infrastructure or bus 306.

One or more processors 304 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 300 also includes user input/output device(s) 303, such as monitors, keyboards, pointing devices, etc., that communicate with communication infrastructure X06 through user input/output interface(s) 302.

Computer system 300 also includes a main or primary memory 308, such as random access memory (RAM). Main memory X08 may include one or more levels of cache. Main memory 308 has stored therein control logic (i.e., computer software) and/or data.

Computer system 300 may also include one or more secondary storage devices or memory 310. Secondary memory 310 may include, for example, a hard disk drive 312 and/or a removable storage device or drive 314. Removable storage drive 314 may be a floppy disk drive, a magnetic tape drive, a compact disk drive, an optical storage device, tape backup device, and/or any other storage device/drive.

Removable storage drive 314 may interact with a removable storage unit 318. Removable storage unit 318 includes a computer usable or readable storage device having stored thereon computer software (control logic) and/or data. Removable storage unit 318 may be a floppy disk, magnetic tape, compact disk, DVD, optical storage disk, and/ any other computer data storage device. Removable storage drive 314 reads from and/or writes to removable storage unit 318 in a well-known manner.

According to an example embodiment, secondary memory 310 may include other means, instrumentalities or other approaches for allowing computer programs and/or other instructions and/or data to be accessed by computer system 300. Such means, instrumentalities or other approaches may include, for example, a removable storage unit 322 and an interface 320. Examples of the removable storage unit 322 and the interface 320 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 300 may further include a communication or network interface 324. Communication interface 324 enables computer system 300 to communicate and interact with any combination of remote devices, remote networks, remote entities, etc. (individually and collectively referenced by reference number 328). For example, communication interface 324 may allow computer system 300 to communicate with remote devices 328 over communications path 326, which may be wired and/or wireless, and which may include any combination of LANs, WANs, the Internet, etc. Control logic and/or data may be transmitted to and from computer system 300 via communication path 326.

In an embodiment, a tangible, non-transitory apparatus or article of manufacture comprising a tangible, non-transitory computer useable or readable medium having control logic (software) stored thereon is also referred to herein as a computer program product or program storage device. This includes, but is not limited to, computer system 300, main memory 308, secondary memory 310, and removable storage units 318 and 322, as well as tangible articles of manufacture embodying any combination of the foregoing. Such control logic, when executed by one or more data processing devices (such as computer system 300), causes such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 3. In particular, embodiments can operate with software, hardware, and/or operating system implementations other than those described herein.

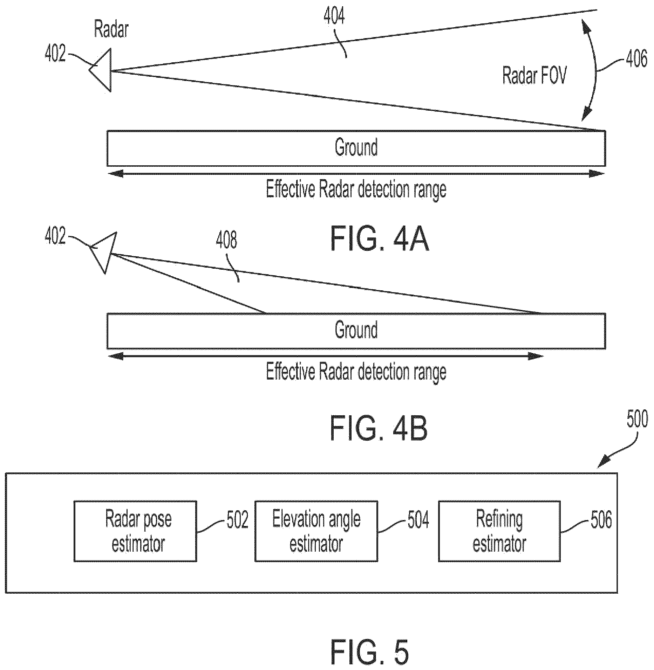

FIG. 4A illustrates an example radar 402 having a first detection range 404 and respective radar field of view 406. These ranges and views may be with respect to ground. FIG. 4B illustrates another example radar 402 having a second detection range 408. The radar detection ranges 404, 408 are determined by the elevation angle of the radar 402. The example elevation angle in FIG. 4A allows for a greater field of view and detection range than that of FIG. 4B. Thus, long range objects may be detected by the radar 402 in FIG. 4A, while this may not be the case of the example illustrated in FIG. 4B. If the radar elevation angle is pointing to the ground, the radar 266 is not able to detect long range objects and therefore may not function as desired. Thus, errors when mounting the radar 266 may decrease the detection range.

FIG. 5 illustrates an elevation angle system 500 that is configured to estimate the angle at which the radar 266 is mounted to the vehicle 102. The elevation angle system 500 may be carried out by the computer system 300, or any other processor and/or controller. The elevation angle system 500 may include a radar pose estimator 502, an elevation angle estimator 504, and a refining estimator 506. The radar pose estimator 502 may use a camera to detect a first radar target and infer a location of the first radar target and an estimated radar pose based on a prior calibration of the camera. The elevation angle estimator 504 may collect radar cross-section (RCS) responses from the first radar target and/or a test radar target and compile the responses in a table. The elevation angle estimator 504 may use a prior azimuth calibration and the compiled look-up table to estimate the elevation angle. The radar pose and elevation angle may also be estimated based on data from the second radar target. The refining estimator 506 may use the radar pose estimations to refine the elevation angle estimate.

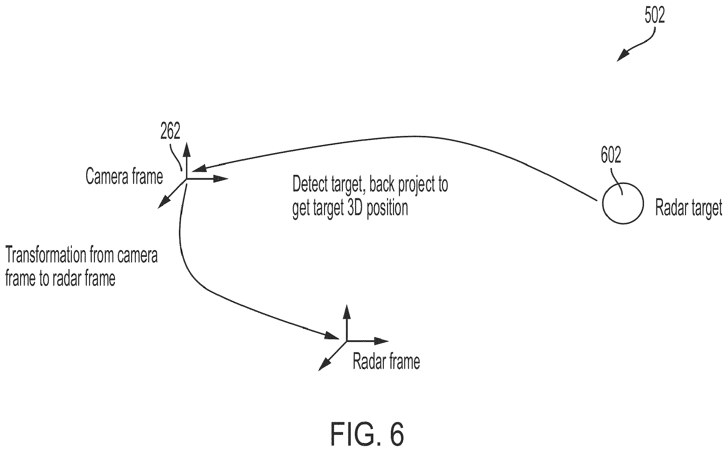

FIG. 6 illustrates an example layout for the radar pose estimator 502 where the system sensor 111, such as the radar 266, is arranged on a vehicle (not illustrated in FIG. 6). As explained above, the radar pose estimator 502 is one of three components to the elevation angle system 500 and is configured to estimate the relative pose of the radar 266 using an image of a radar target 602. The radar 266 may be arranged on the vehicle at a certain elevation angle. In order to estimate the elevation angle, the elevation angle system 500 may include or assume the radar target 602 arranged external and in a vicinity of the vehicle 102. The camera 262 may detect the radar target 602 and capture an image of the radar target 602. As explained above, the camera 262 may have various calibrations associated therewith. These calibrations may be preinstalled and maintained in memory 308 and/or memory 310. The elevation angle system 500 may detect the radar target 602 within the camera frame captured by the camera 262. This may be implemented based on a computer-vision algorithm. From there, the elevation angle system 500 may infer a radar target location based on the camera frame of the detected radar target 602 and the known calibrations.

The elevation angle system 500 may translate the camera frame to a radar frame. This may be implemented based on a coordinate transform. The location of the radar target 602 may be provided in three dimensional coordinates, such as x, y and z coordinates. Such coordinates may be used to infer the estimated radar pose.

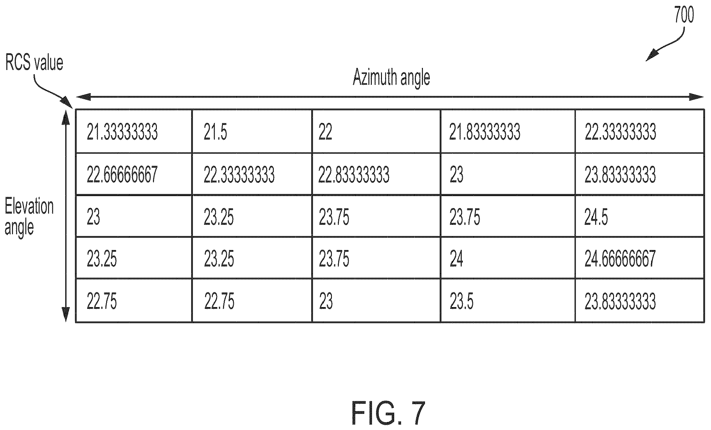

FIG. 7 illustrates an example radar cross section (RCS) value table for azimuth angles vs. elevation angle of the elevation angle estimator 504. The elevation angle estimator 504 of the elevation angle system 500 may use this RCS module as the second of the three components. The radar target 602 (as illustrated in FIG. 6), may have a plurality of azimuth angles. The table may be generated by adjusting the relative azimuth and elevation angle between the radar and the target (e.g. the test radar target) and collecting the radar responses for each. The elevation angle system 500 may receive via the radar 266 a set of RCS responses for the radar target 602, each including an elevation angle and azimuth angle. The elevation angle system 500 may then compile these results into a table, for example, the table 700 illustrated in FIG. 7. This compiled table may create a look up table of various RCS values. Thus, these values may be generated by testing of the radar target (e.g. the test radar target) at various positions. The table 700 may be stored in the memory 308 of the computer system 300.

Once the look up table 700 has been generated, the computer system 300 may receive an RCS response from radar 266 indicating the presence of the radar target or another first radar target. Once the RCS value and azimuth angle are received, the look up table 600 may be used to find the corresponding elevation angle.

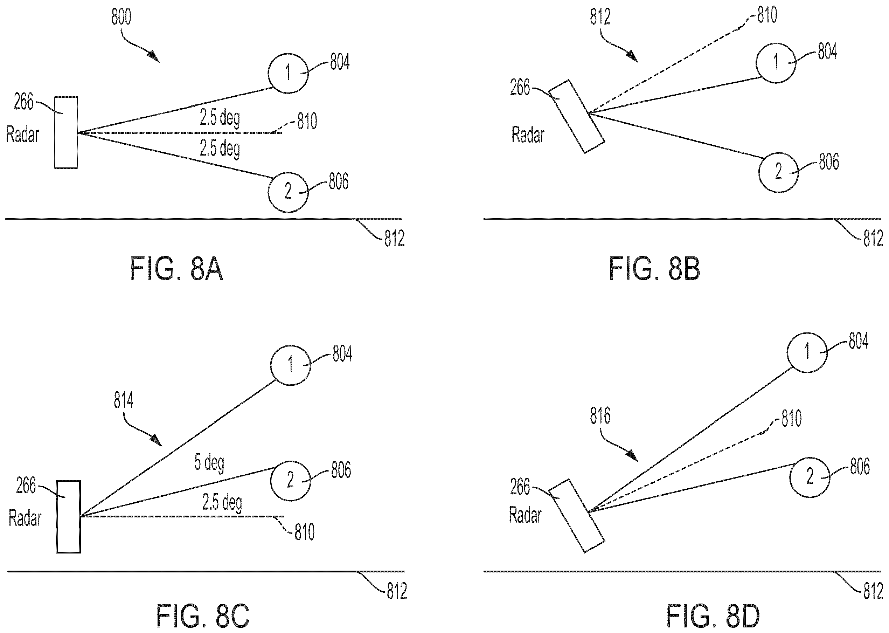

FIGs. 8A-D illustrate example radar layouts for the refining estimator 506 of the elevation angle system 500. The refining estimator 506 may be the third component of the elevation angle system 500 and may be configured to refine the estimated angle from the radar pose estimator 502 using a two-radar-target layout to refine the estimated angle. Generally, radar responses include elevation angle estimation readings. However, these redons or readings may be symmetric at zero degrees, which means that when a radar response has an estimated elevation angle of two degrees, it is not possible to know whether the response came from an object at two degrees, or negative two degrees. This causes the readings to be ambiguous.

FIG. 8A illustrates a two-radar-target layout 800 where the radar 266 detects a first radar target 804 and a second radar target 806 where the targets are each on either side of the radar (e.g. either side of a radar direction 810). The radar 266 has a radar direction 810. The radar pitch is the pitch direction 810 relative to the horizontal ground 812. In the example illustrated in FIG. 8A, the radar pitch is 0 degrees. Assuming that the first radar target 804 and the second radar target 806 are similar spaced within the radar field of view, the RCS reading from each of the targets should also be similar when the radar pitch direction 810 is at zero or near zero. This is due to the elevation angle relative to the targets being similar. In this example, each target is illustrated as being approximately 2.5 degrees from the radar pitch.

FIG. 8B illustrates another two-radar radar-target layout 812 where the radar 266 detects the first radar target 804 and the second radar target 806 where both the targets are on either side of the radar. The radar 266 has a radar pitch 810. In the example illustrated in FIG. 8A, the radar pitch is approximately 2.5 degrees. In this example, the radar pitch 810 may cause the field of view of the radar to be skewed due to the fact that the radar is tilted or improperly positioned. In this case, the RCS values received from the targets would differ significantly (e.g. more than a given threshold) from one another, indicating the improper positioning of the radar.

FIG. 8C illustrates a two-radar-target layout 814 where the radar 266 detects a first radar target 804 and a second radar target 806 where both the targets are on either side of the radar. In the example illustrated in FIG. 8C, the radar pitch is zero degrees or near zero degrees. In this case, the RCS values received from the targets would differ significantly (e.g. more than a given threshold) from one another, because each are offset from the zero degree pitch.

FIG. 8D. illustrates a two-radar-target layout 816 where the radar 266 detects a first radar target 804 and a second radar target 806 where the targets are each on one side of the radar. In the example illustrated in FIG. 8D, the radar pitch is approximately 2.5 degrees. Because the pitch 810 aligns the radar to face generally equidistantly between the targets, the received RCS from the targets should be similar.

FIGs. 8A-D illustrate how to resolve the elevation angle ambiguity (e.g., the sign of the elevation angle reading), which may be done by checking the RCS from both orbs (that may represent the radar targets). If the delta RCS is small, the system can assume that the radar facing in FIG. 8A, and the signs for elevational angle readings from orb 1 are positive, while those for orb 2 are negative. If the RCS from orb 1 is much greater than from orb 2, the system may infer that the radar facing is similar to FIG. 8B, and readings from both orbs are positive. This is also similar for FIGs. 8C and 8D.

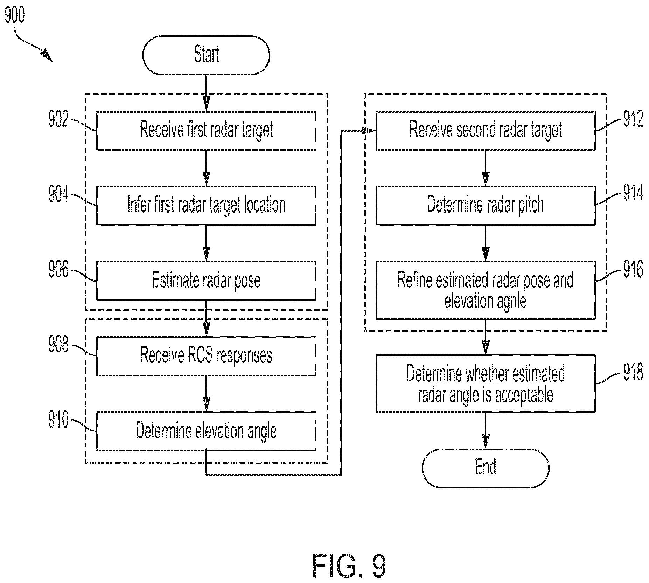

FIG. 9 illustrates an example process 900 for the elevation angle system 500. The process 900 may include steps from the radar pose estimator 502, elevation angle estimator 504 and the refining estimator 506. The process 900 may begin at block 902 where the computer system 300 may provide (e.g. receive) a camera frame of a first radar target, such as radar target 602 as illustrated in FIG. 6, and/or first radar target 604 illustrated in FIGs. 8A-D. As explained, the radar 266 may be arranged on the vehicle 102. The camera 262 may detect and capture the radar target 602 and transmit the frame to the computer system 300.

At block 904, the computer system 300 may infer the first radar target location by comparing calibrations previously installed in one of the at least one memories of the computer system 300 and infer the radar target location from the calibrations.

At block 906, the computer system 300 may determine an estimated radar pose from the inferred radar target location. Likewise, at least one camera frame of a second radar target may be provided (e.g. together with the first radar target in the same frame or in a separate frame from the first radar target), e.g. for estimating the radar pose.

At block 908, the computer system 300 may receive a set of RCS responses from the radar 266 indicating a detectability of the radar target.

At block 910, the computer system 300 may determine the elevation angle of the radar based on the RCS responses of the radar target. As explained above with respect to FIG. 6, the previously generated look up table 600 may be used to determine the elevation angle.

At block 912, the computer system 300 may receive an RCS response of a second radar target, such as second radar target 806 as illustrated in the examples in FIGs. 8A-D.

At block 914, the computer system 300 may determine or use the RCS response of the second radar target 806 to determine the radar pitch 810. As explained above with respect to FIGs. 8A-D, the pitch should ideally be near zero when the first radar target 804 and second radar target 806 have similar RCS values, and can be assumed to be greater than zero when the first radar target 804 and second radar target 806 have RCS values that differ more than a predefined threshold.

At block 916, the computer system 300 may use the determined radar pitch to refine the estimated radar angle from the radar pose estimator 504 estimated at block 906 and the elevation angle estimated in block 910.

At block 918, the computer system 300 may determine whether the estimated radar angle or the pitch angle is within a certain threshold of acceptable angles. If not, the computer system 300 may issue an alert via user interfaces, indicating the error in the radar placement. The acceptable thresholds may be a target range of acceptable angles for the radar 266 to be mounted. Additionally or alternatively, the acceptable thresholds may include a single threshold angle that the radar 266 should not exceed. For example, the estimated radar pose may be used to determine a height of a radar mount position of the radar above ground. The height value may be used for determining an expected value range that the estimated elevation angle may be expected to be in (if the radar is mounted correctly). For example, using the radar pitch it may be additionally verified that the height of the radar mount position and the pitch angle indicate a correct radar angle in the vehicle, i.e. a correct mounting, and/or a correct elevation angle. It may, e.g., otherwise be possible that a wrong radar angle may not be detected or a correct radar angle may be misinterpreted, as for some values of the height of the radar mount position a certain pitch angle (as determined by said difference) might be correct whereas for other values of the height of the radar mount position the same pitch angle may be incorrect. Thus, the choice of the values of the acceptable angles may be controlled or depend on the estimated radar pose. The radar angle can be expressed, e.g., as the mounting angle or direction of the radar at its radar mount position. Note that it can be advantageous to distinguish between an angle relative to ground and an angle relative to vehicle, as the vehicle may exhibit a certain pitch angle.

The process 900 may then end.

While this disclosure describes example embodiments for example fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

In the following, further beneficial aspects of the subject-matter described herein are listed:
1. A computer-implemented method, comprising:
   providing (e.g. receiving or fetching or obtaining) at least one camera frame of a first radar target and/or a second radar target;
   determining an estimated radar pose based at least in part on the at least one provided camera frame;
   providing (e.g. receiving or fetching or obtaining) a first radar cross-section (RCS) response from the first radar target and/or a second radar cross-section (RCS) response from a second radar target;
   determining an estimated elevation angle based at least in part on the first RCS response; and
   determining an estimated radar angle by refining the estimated radar pose and/or the estimated elevation angle based at least in part on the second RCS response.
2. The computer-implemented method of aspect 1, wherein the determining the estimated elevation angle includes converting the received camera frame to a radar frame having coordinates to identify a location of the first radar target.
3. The computer-implemented method of aspect 2, wherein the converting the received camera frame to a radar frame includes applying a predetermined camera calibration to the received camera frame.
4. The computer-implemented method of any of the preceding aspects, wherein the determining an estimated elevation angle based at least in part on the first RCS response includes comparing the first RCS response to a look-up table, wherein the first RCS response includes an azimuth angle.
5. The computer-implemented method of any of the preceding aspects, further comprising providing (e.g. receiving or fetching or obtaining) the second RCS response from the second radar target, wherein the determining an estimated radar angle includes comparing the first RCS response to the second RCS response.
6. The computer-implemented method of aspect 5, further comprising determining a difference between the first RCS response to the second RCS response.
7. The computer-implemented method of aspect 6, further comprising determining a radar pitch based on the difference between the first RCS response and the second RCS response.
8. The computer-implemented method of any of the preceding aspects, further comprising transmitting instructions indicating a radar installation error.
9. The computer-implemented method of any of the preceding aspects, further comprising: determining whether the estimated radar angle or the radar pitch is within a certain threshold of predefined acceptable angles, and if not, issuing an alert via user interfaces, indicating an error in the radar placement.
10. A system, comprising:
   optionally a memory; and
   at least one processor (optionally coupled to the memory and) configured to (e.g. via programming instructions, optionally stored in the memory):
      provide (e.g. receive or obtain or fetch) a camera frame of at least one first radar target,
      determine an estimated radar pose based at least in part on the camera frame of the at least one first radar target,
      receive a first radar cross-section (RCS) response from the at least one first radar target, and
      determine an estimated elevation angle based at least in part on the first RCS response,
      receive a second RCS response from at least one second radar target, and
      determine an estimated radar angle by refining the estimated radar pose and the estimated elevation angle based at least in part on the second RCS response.
11. The system of aspect 10, wherein the determining the estimated elevation angle includes converting the received camera frame to a radar frame having coordinates to identify a location of the first radar target.
12. The system of aspect 11, wherein the converting the received camera frame to a radar frame includes applying a predetermined camera calibration to the received camera frame.
13. The system of any of aspects 10 to 12 , wherein the determining an estimated elevation angle based at least in part on the first RCS response includes comparing the first RCS response to a look-up table, wherein the RCS response includes an azimuth angle.
14. The system of any of aspects 10 to 13, wherein the determining an estimated radar angle by refining the estimated radar pose and the estimated radar elevation based on at least in part on the second RCS response includes comparing the first RCS response to the second RCS response.
15. The system of aspect 14, wherein the processor is further configured to determine a difference between the first RCS response to the second RCS response.
16. The system of aspect 15, wherein the processor is further configured to determine a radar pitch based on the difference between the RCS response and the second RCS response.
17. The system of any aspects 10 to 16, wherein the processor is further configured to transmit instructions indicating a radar installation error. A computer program, or a computer-readable medium storing the computer program, comprising instructions that, when executed by at least one computing device, cause any of the at least one computing device to perform the steps of any of the preceding method aspects.
18. A computer program, and/or a computer-readable medium storing the computer program, comprising instructions that, when executed by at least one computing device, cause any of the at least one computing device to perform the following steps:
   receive a first radar cross-section (RCS) response from a first radar target;
   determine an estimated elevation angle based at least in part on the first RCS response;
   receive a second RCS response from a second radar target; and
   determine an estimated radar angle by refining the estimated radar pose and the estimated elevation angle based at least in part on the second RCS response.
19. The computer program and/or the medium of aspect 18, wherein the determining the estimated elevation angle includes converting the received camera frame to a radar frame having coordinates to identify a location of the first radar target.
20. The computer program and/or the medium of aspect 18 or 19, wherein the determining an estimated elevation angle based at least in part on the first RCS response includes comparing the first RCS response to a look-up table, wherein the RCS response includes an azimuth angle.
21. The computer program and/or the medium of any of aspects 18 to 20, wherein the determining an estimated radar angle by refining the estimated radar pose and the estimated radar elevation based on at least in part on the second RCS response includes comparing the first RCS response to the second RCS response.
22. A system, comprising means for performing a method according to any of the preceding method aspects.
23. The estimated radar angle, or a data storage medium storing the estimated radar angle, as generated in any of the preceding method aspects.
24. Use of the estimated radar angle, as generated in any of the preceding method aspects, for controlling a system or a vehicle such as an autonomous vehicle.
25. A system, comprising:
   optionally a memory; and
   at least one processor optionally coupled to the memory and configured (e.g. via programming instructions from e.g. the memory) to:
      receive a camera frame of at least one first radar target,
      determine an estimated radar pose based at least in part on the received camera frame of the at least one first radar target,
      receive a first radar cross-section (RCS) response from the at least one first radar target, and
      determine an estimated elevation angle based at least in part on the first RCS response,
      receive a second RCS response from at least one second radar target, and
      determine an estimated radar angle by refining the estimated radar pose and the estimated elevation angle based at least in part on the second RCS response.
26. A computer implemented method, comprising:
   receiving at least one camera frame of a first radar target and a second radar target;
   determining an estimated radar pose based at least in part on the at least one received camera frame;
   receiving a first radar cross-section (RCS) response from the first radar target and second radar target;
   determining an estimated elevation angle based at least in part on the first RCS response; and determining an estimated radar angle by refining the estimated radar pose and the estimated elevation angle based at least in part on the first RCS response.
27. The method of aspect 26, further comprising receiving a second RCS response from at least one second radar target, wherein the determining an estimated radar angle includes comparing the first RCS response to the second RCS response.
A combination of any of the aspects 25 to 27 with any of the aspects 1 to 25 is also envisaged.

The breadth and scope of this disclosure should not be limited by any of the above-described example embodiments, but should be defined only in accordance with the following claims and their equivalents.

## Claims

1. A computer-implemented method, comprising:
providing at least one camera frame of a first radar target;
determining an estimated radar pose based at least in part on the at least one provided camera frame;
providing a first radar cross-section (RCS) response from the first radar target;
determining an estimated elevation angle based at least in part on the first RCS response;
providing a second RCS response from a second radar target; and
determining an estimated radar angle by refining the estimated radar pose and/or the estimated elevation angle based at least in part on the second RCS response.

2. The computer-implemented method of claim 1, wherein the determining the estimated elevation angle includes converting the received camera frame to a radar frame having coordinates to identify a location of the first radar target.

3. The computer-implemented method of claim 2, wherein the converting the received camera frame to a radar frame includes applying a predetermined camera calibration to the received camera frame.

4. The computer-implemented method of any of the preceding claims, wherein the determining an estimated elevation angle based at least in part on the first RCS response includes comparing the first RCS response to a look-up table, wherein the first RCS response includes an azimuth angle.

5. The computer-implemented method of any of the preceding claims, wherein the determining an estimated radar angle includes comparing the first RCS response to the second RCS response.

6. The computer-implemented method of claim 5, further comprising determining a difference between the first RCS response to the second RCS response.

7. The computer-implemented method of claim 6, further comprising determining a radar pitch based on the difference between the first RCS response and the second RCS response.

8. The computer-implemented method of any of the preceding claims, further comprising transmitting instructions indicating a radar installation error.

9. The computer-implemented method of any of the preceding claims, further comprising: determining whether the estimated radar angle or the radar pitch is within a certain threshold of predefined acceptable angles, and if not, issuing an alert via user interfaces, indicating an error in the radar placement.

10. A system, comprising means for performing a method according to any of the preceding method claims.

11. A computer program, and/or a computer-readable medium storing the computer program, comprising instructions that, when executed by at least one computing device, cause any of the at least one computing device to perform the steps of any of the preceding method claims.

12. The estimated radar angle, or a data storage medium storing the estimated radar angle, as generated in any of the preceding method claims.

13. Use of the estimated radar angle, as generated in any of the preceding method claims, for controlling a system or a vehicle such as an autonomous vehicle.
